# EUROPÄISCHE PATENTSCHRIFT

(11) **EP 0 975 681 B1**
(45) Veröffentlichungstag und Bekanntmachung des Hinweises auf die Patenterteilung: **01.10.2003**
(21) Anmeldenummer: 98924140.1
(22) Anmeldetag: 17.04.1998
(51) Int. Cl.: C08F 8/28, A61L 15/00

(54) **DRUCKFÄHIGE QUELLPASTE UND DEREN VERWENDUNG**
PRINTABLE SWELLING PASTE AND ITS USE
PATES GONFLANTES IMPRIMABLES ET LEUR UTILISATION

(30) Priorität: 24.04.1997 DE 19717395
(43) Veröffentlichungstag der Anmeldung: 02.02.2000
(73) Patentinhaber: STOCKHAUSEN GmbH & Co. KG, 47805 Krefeld (DE)
(72) Erfinder: HOUBEN, Jochen, D-47906 Kempen (DE); MERTENS, Richard, D-47803 Krefeld (DE)
(74) Vertreter: Wolff, Felix, Dr.
(86) Internationale Anmeldenummer: EP9802286
(87) Internationale Veröffentlichungsnummer: WO98047932

(56) Entgegenhaltungen:
- EP-A- 0 357 474
- WO-A-93/02115
- DE-A- 19 521 431
- FR-A- 2 345 470
- GB-A- 802 740

## Beschreibung

Die vorliegende Erfindung betrifft eine druckfähige Quellpaste, die eine Mischung von Polymeren mit Carboxyl- und Amidgruppen-Einheiten und Aldehydvernetzern enthält. Die Quellpaste kann über lange Zeit gelagert werden, ohne daß Verdickung oder Gelierung eintritt. Sie wird auf Trägermaterialen unterschiedlichster Art aufgetragen und durch Einwirkung von Wärme vernetzt. Dabei entstehen Strukturen, die ein hohes Aufnahmevermögen für Wasser und wäßrige Flüssigkeiten haben.

Superabsorbierende Polymere sind seit langem bekannt und in Form von Pulvern z.B. unter der Bezeichnung FAVOR oder CABLOC im Handel. Allerdings ist die Verarbeitung von Pulvern technisch aurwendig und, sobald der Abrieb zu einatembarem Feinanteil führt, arbeitsmedizinisch nicht unbedenklich.

Eine alternativ mögliche Polymerisation von Monomerlösung auf vorgefertigten Flächen oder Fäden ist zwar bekannt, ist aber wegen der nötigen Schutzgastechnik und den zu beachtetenden Sicherheitsvorschriften Betrieben der chemischen Industrie vorbehalten und kann nicht in Betriebe anderer Branchen wie z.B. der Druck- und Textilindustrie verlagert werden.

EP 188 091 beschreibt absorptionsfähige poröse Flächengebilde, deren Herstellung durch Foulardieren einer Mischung aus einer wässrige Lösung eines unvernetzten Praepolymers mit einem Vernetzer auf ein Nonwoven und anschließender thermischer Vernetzung erfolgt. Nachteilig an dem genannten Verfahren ist, daß die Vernetzer vom Typ der Polyhaloalkanole, Haloepoxialkane und Polyglycidylether wegen ihrer Reaktivität erst kurz vor der Verarbeitung zugegeben werden können, da es sonst bereits bei der Lagerung zu unerwünschten Verdickungen der Mischung kommt und daß die beschriebenen Vernetzer gesundheitlich sehr bedenklich sind.

In der EP 357 474 wird das Aufsprühen von niedrigviskosen wässrigen Lösungen unvernetzter Polyacrylsäuren auf Flächengewebe aus Cellulose und nachfolgender thermischer Vernetzung zu wasserquellbaren Gelen durch gleichzeitig aufgebrachte Vernetzer beschrieben. Als Vernetzer werden mehrwertige Metallionen sowie Epoxide, Aziridine, Polyglycidylether beschrieben, die wegen ihres Krebs erzeugenden Potentials so gut wie nicht mehr einsetzbar sind, als besonders problematisch gelten dabei die Hygiene- und Lebensmittelverpackungsbranche. Darüber hinaus bewirken sie bei der Lagerung der Beschichtungslösungen bereits bei Raumtemperatur eine vorzeitige Vernetzung, so daß eine weitere Verarbeitung der hochviskosen bzw. gelierten Masse nicht mehr möglich ist.

In der DE-OS 2 327 249 wird ein Waschverfahren beschrieben, bei dem wasserunlösliche, feste Kationenaustauscher auf Basis von Polymerisaten aus (Meth)acrylsäure, (Meth)acrylamid und Formaldehyd bzw. Formaldehyd-Amin-Kondensaten eingesetzt werden. Die Polymerisation der Monomere findet in Gegenwart des Formaldehyds statt und führt direkt zu vernetzten, wasserunlöslichen Polymeren. Es wird kein isolierbarer wasserlöslicher Zustand des Polymers durchlaufen, in dem eine Verarbeitung als gelöstes Polymer möglich wäre.

In der US-Re 32 649, Seite 7, wird Glyoxal ebenfalls als mögliches Vernetzungsreagenz bei der Herstellung von Superabsorbern erwähnt, jedoch handelt es sich hier ebenso wie in der DE-OS 2 327 249 um eine Polymerisation, die in einem Schritt zu vernetzten, wasserunlöslichen Polymerisaten führt, bei der keine löslichen Zwischenstufen isoliert werden können.

In der DE 195 21 431 A1 wird ein Verfahren beschrieben, bei dem reaktionsfähige Vernetzer wie polyfunktionale Epoxide, Aziridine, Polyglycidether und Epihalohydrine kurz vor dem Druckvorgang zu einer wässrigen Lösung einer vorvernetzeten Polyacrylsäure gegeben werden. Obwohl hier bereits eine druckfähige Paste beschrieben wird, haben diese reaktionsfähigen Vernetzer den entscheidenden Nachteil, daß die Mischung der beiden Komponenten wegen einer schon bei Raumtemperatur einsetzenden Verdickung nicht lange gelagert werden kann, sondern stündlich wieder frisch angesetzt werden muß.

In der FR 2345 470 wird ein Verfahren zur Verbesserung der Absorptionsrate von bereits vernetzten und daher wasserunlöslichen Polymerisaten beschrieben gemäß dem die Oberfläche dieser partikulierten Polymerisate mit Glyoxal behandelt wurde.

Der Erfindung lag deshalb die Aufgabe zugrunde, eine druckfähige Paste bereitzustellen, die in einem Arbeitsgang auf vorgefertigte Flächengebilde aufzubringen ist und die nach einer anschließenden thermischen Nachbehandlung in der Lage ist, in Gegenwart von Wasser oder wässrigen Lösungen zu quellen und dabei das ursprüngliche Volumen zu vervielfachen. Die fertige Paste soll mindestens eine Woche bei Raumtemperatur lagerbar sein, ohne daß es zu Viskositätsänderungen der Paste oder zu einem Nachlassen des Quellvermögens nach der Verarbeitung kommt. Weiter muß die Paste frei sein von leichtentzündlichen oder gefährlichen Stoffen. Die Vernetzung soll bereits bei Temperaturen von 140°C möglich sein und darf bei Temperaturen ab 160°C wegen der thermischen Belastbarkeit des Trägermaterials bzw. aus wirtschaftlichen Gründen nur maximal 5 Minuten in Anspruch nehmen. Danach muß die Vernetzung beendet sein und das beschichtete Substrat muß eine ausreichende Quellfähigkeit und Quellgeschwindigkeit haben. Weiter soll das entstandene Gel eine ausreichende Festigkeit aufweisen.

Die erfindungsgemäße Aufgabe konnte überraschenderweise durch ein Gemisch zweier Komponenten gelöst werden, wobei es sich bei der Komponente 1 um eine wässrige Lösung eines Copolymers aus Carboxylgruppen und Amidgruppen enthaltenden Monomeren und und bei der Komponente 2 um einen Aldehydvernetzer handelt, wobei ggf. weitere Zusatzstoffe in der Mischung vorhanden sein können.
A) Gegenstand der Erfindung ist somit eine Quellpaste aus einer Komponente 1, bestehend aus einer wässrigen, teil- oder völlig neutralisierten Lösung eines Polymers, das durch radikalische Polymerisation von Mischungen aus
   a) Amidgruppen enthaltenden Monomeren und
   b) Carboxylgruppen und/oder Carboxylatgruppen enthaltenden Monomeren sowie
   c) ggf. weiteren radikalisch polymerisierbaren Monomeren
   hergestellt ist und
B) aus einer Komponente 2, bestehend aus einem Vernetzer sowie
C) ggf. weiteren Zusatzstoffen, dadurch gekennzeichnet, daß die Vernetzerkomponente 2 ein Aldehyd oder eine Adehyd abspaltende Verbindung ist.

Das Polymer der Komponente 1 besteht bevorzugt aus
a) 1 - 80 ,besonders bevorzugt aus 1-60 und insbesondere bevorzugt zu 1 bis 20 Molprozent Amidgruppen enthaltende, radikalisch polymerisierter Monomere und
b) 20 - 99, besonders bevorzugt aus 40 - 99 und insbesondere bevorzugt zu 80 - 99 Molprozent teilneutralisierter carboxylgruppenhaltiger, radikalisch polymerisierter Monomere.

Amidgruppen enthaltende Monomere nach a) sind beispielsweise (Meth)acrylsäureamide wie Acrylamid, Methacrylamid und Vinylcarbonsäureamide wie N-Vinylformamid und N-Vinylacetamid. Vorzugsweise verwendet man Acrylamid.

Als carboxylgruppenhaltige Monomere nach b) kommen neben Acrylsäure noch Methacrylsäure, Maleinsäure, Fumarsäure, Itakonsäure sowie deren Salze und Mischungen in Frage. Als Gegenionen kommen beispielsweise Natrium, Kalium, Ammonium, Alkylammmonium, Alkanolammonium oder deren Mischungen in Frage. Bevorzugt wird als carboxylgruppenhaltiges Monomer Acrylsäure mit dem Gegenion Natrium eingesetzt.

Der Neutralisationsgrad der Carboxylgruppen der erfindungsgemäßen Polymere ist mitentscheidend für die Quelleigenschaften und die Retention der vernetzten Quellpasten und liegt vorzugsweise bei mindestens 25, insbesondere bevorzugt bei mindestens 50 Molprozent. Die Neutralisation der Carboxylgruppen kann erfindungsgemäß vor oder nach der Polymerisation stattfinden, wobei häufig ein Teil des Neutralisationsmittels vor und der Rest nach der Polymerisation zugegeben wird. In jedem Fall ist aber darauf zu achten, daß durch Alkalizugabe keine ungewollte Verseifung der Amidgruppen enthaltenden Monomere eintritt. Im bereits gebildeten Polymer kann es aber durchaus sinnvoll sein, durch eine saure Verseifung der aus beispielsweise Vinylcarbonsäureamiden entstandenen Einheiten Amingruppen zu erzeugen, die ihrerseits mit der Vernetzerkomponente 2 vernetzend zu reagieren vermögen.

Zusätzlich zu den Monomeren a) und b) können in die Polymerkomponente 1
c) 0 - 49 Mol% andere, anionische oder nichtionische Monomere
einpolymerisiert sein wie beispielsweise (Meth)allylsulfonsäure, Vinylsulfonsäure, 2-Acrylamido-2-methyl-1-propansulfonsäure, Mono(meth)acrylsäure-ester von Alkoholen, Vinylester, Alkyloxethylaten oder Alkylphenoloxethylaten. Die Comonomeren werden zur Modifizierung der Polymereigenschaften eingesetzt, beispielsweise um die Haftung auf dem Trägermaterial zu verbessern, um die Salzstabilität zu erhöhen oder um die Flexibilität anzupassen.

Bei der Herstellung der erfindungsgemäßen Quellpasten werden die Polymerisate meistens in Form von 15 bis 60 Gew.%, bevorzugt 20 bis 40 Gew.% wäßrigen Lösungen eingesetzt. In besonderen Fällen, etwa bei der Herstellung von Folien, kann es erforderlich werden, daß Anteile von die Filmbildung verbessernden alkoholischen Zusätzen zu der wäßrigen Phase erforderlich werden.

Die Herstellung der Copolymerisate ist Stand der Technik und erfolgt entweder durch adiabatische oder isotherme Polymerisation der Lösung der Monomeren, wobei die Neutralisation ganz oder teilweise schon in der Monomerenlösung stattfinden kann oder erst beim fertigen Polymerisat. Typischerweise wird die Polymerisation unter Verwendung eines Redoxpaares als Initiator oder eines thermisch-initiierbaren Katalysators oder einer Mischung dieser beiden gestartet. Typische Redoxpaare, die insbesondere bei der Polymerisation in wäßriger Lösung angewendet werden sind: Wasserstoffperoxyd/Ascorbinsäure, Natriumpersulfat/Natriumbisulfit; Hydroxylaminhydrochlorid/Wasserstoffperoxid; Ascorbinsäure/ t-BHP, Redoxsysteme unter Einschluß von Metallsalzen,und andere bekannte Systeme. Wird die Polymerisation in organischen Lösungsmitteln durchgeführt, finden häufig organische Peroxide, gegebenenfalls in Kombination mit Redoxpartnern Anwendung. Zur Steuerung des Molgewichtes kann es sinnvoll sein, kettenübertragende Verbindungen, sogenannte Regler, wie z.B. Mercaptoethanol, Thioglykolsäure oder andere einzusetzen.

In einigen Fällen hat es sich als günstig erwiesen, die erfindungsgemäß einzusetzenden Copolymerisate bei der Herstellung mit geringen Mengen radikalisch vernetzender Monomere mit der Maßgabe vorzuvernetzen, daß keine wasserunlöslichen Anteile entstehen. Die wäßrigen Lösungen dieser leicht vorvernetzten Polymerisate können der erfindungsgemäßen Quellpaste u.a. für die Verarbeitung günstige rheologische Eigenschaften verleihen oder aber die Film- und Quelleigenschaften des vernetzten Endproduktes verbessern.

Die Komponente 2 fungiert als Vernetzer und verbindet in einer Mannichreaktion die einzelnen Polymerketten über die dort eingebauten Acrylamidfunktionen zu einem wasserunlöslichen aber immer noch wasserquellbaren Netzwerk. Als Vernetzer kommen alle wasserlöslichen oder leicht wasserdispergierbaren Verbindungen mit mindestens einer Aldehydfunktion in Betracht oder solche Verbindungen, die in Gegenwart von Wasser und bei Erwärmung Aldehydgruppen freisetzen. Beispielsweise seien hier Formaldehyd, Hexamethylentriamin, Acetaldehyd, Paraldehyd, Glyoxal, Trimeres Glyoxalhydrat und Glyoxylsäure genannt.

Die Quellpaste wird durch Mischen der wässrigen Polymerlösung (Komponente 1) und des Vernetzers (Komponente 2) hergestellt und kann direkt danach verarbeitet werden. Vielfach hat es sich als vorteilhaft erwiesen, auch die Vernetzerkomponente in Form einer Lösung zuzusetzen. Das Gewichtsverhältnis von Polymer zu Vernetzer innerhalb der Quellpaste kann in weiten Bereichen schwanken. Üblicherweise liegen die Vernetzergehalte bezogen auf den Polymeranteil im Bereich von 1 bis 15 Gew.%, vorzugsweise von 1 bis 9 Gew.%. In Abhängigkeit vom Gehalt an Amidgruppen tragenden Monomeren des Polymers ist mehr oder weniger Vernetzer erforderlich, um gewünschte Quell- und Retentionseigenschaften zu erzeugen. Ebenso ist die Vernetzungsaktivität des Vernetzers bei der einzusetzenden Menge zu berücksichtigen. Die genauen Vernetzermengen sind für den Fachmann im Zuge einer Produktoptimierung ohne Schwierigkeiten zu ermitteln.

Zur Einstellung der gewünschten Viskosität der erfindungsgemäßen Quellpasten ist dem Durchschnittsfachmann das Verdünnen mit Wasser oder der Zusatz von Verdickem oder Tensiden geläufig. Im Gegensatz zu den Mischungen aus der Lehre der deutschen Anmeldung DE 195 21 431 A1 kann die Quellpaste mehrere Wochen ohne Qualitätseinbuße gelagert werden, was eine deutliche Erleichterung im Produktionsprozeß darstellt. Auch entfällt die Handhabung von stark toxischen, cancerogenen oder mutagenen Vernetzern beim, meist im Umgang mit derartigen Substanzen ungeübten Endverbraucher, wie das nach dem Stand der älteren Anmeldungen EP 188 091, EP 357 474 und DE 195 21 431 noch nötig ist.

In der Quellpaste können noch weitere, nicht einpolymerisierte Zusatzstoffe mit vorteilhafter Wirkung enthalten sein. Insbesondere kommen hier Stoffe zur Verringerung der Sprödigkeit (Härte) des getrockneten Produkts, solche zur Verringerung der Klebrigkeit, zur Verbesserung der Druckviskosität und zur Erhöhung der Leitfähigkeit in Frage. So können zur Verbesserung der Gelstabilität und zur Einstellung der gewünschten Druckviskosität übliche, in Wasser wirksame Verdicker, wie etwa Cellulosederivate oder aber höher vernetzte Polyacrylate zugesetzt werden, wie sie z.B. unter der Bezeichnung "Cabloc CTF" von der Firma Stockhausen vertrieben werden. Diese quellen in der Polyacrylatlösung nicht wie üblich auf, verbessern aber das Viskositätsverhalten beim Druckvorgang deutlich.

Die so hergestellte Quellpaste kann nach bekannten Methoden auf ein vorgefertigtes Flächengebilde, Gewebe, Vlies oder auf Fäden aufgebracht werden. Bevorzugt wird dabei das Aufdrucken oder Aufrakeln mittels Schablone auf Gewebe oder auf Nonwoven zur Erreichung eines gleichmäßigen Musters.

Anschließend muß das so aufgebrachte Polymer zur Vemetzung gebracht werden, was durch eine thermische Behandlung erreicht werden kann. Die Dauer der thermischen Behandlung hängt dabei von der angewendeten Temperatur und von der Konzentration des gewählten Vernetzers, sowie vom Molverhältnis der in den Polymerketten eingebauten Amideinheiten ab. Sie kann zwischen 100°C und 160°C, bevorzugt 130-160°C, besonders bevorzugt zwischen 140 und 150°C liegen. Aufjeden Fall muß die Temperatur der Vernetzung oberhalb des Siedepunktes des Lösungsmittels (Wasser) und unterhalb der Schrumpfungstemperatur des Trägersubstrates liegen. Aus wirtschaftlichen Gründen liegt die zur Verfügung stehende Zeit bei unter 5 Minuten, bevorzugt unter 2 Minuten.

Die erfindungsgemäße Quellpaste weist nach dem Vernetzen vorteilhaft eine Retention von mindestens 25 g/g, vorzugsweise mindestens 60 g/g auf und besitzt ferner ebenfalls nach dem Vernetzen eine Quellhöhe pro 10 g/m² Trockensubstanzauftrag von mindestens 0,8 mm, vorzugsweise von mindestens 1,0 und insbesondere von mindestens 1,5 mm.

Die Herstellung von trägerfreien Folien erfolgt zunächst durch Aufbringen der Quellpaste auf ein Trägermaterial, vorzugsweise aus Metall oder Kunststoff und gegebenfalls unter Verwendung von Trennmitteln. Nach der Entfernung des Lösemittels, das gegebenenfalls unterhalb des Siedepunktes des Lösemittels erfolgt und der thermischen Vernetzung wird die Folie, oftmals nach vorheriger Konditionierung, von dem Trägermaterial entfernt.

Das fertige Substrat kann Verwendung in mehreren Industriebereichen finden, so in der Kabelindustrie, in der Hygieneindustrie, bei Lebensmittelverpackungen, in Anwendungen des Landschaftsbaus, in der Bekleidungsindustrie oder auch in der Beerdigungsbranche.

Zur Testung der verschiedenen Quellpasten wurden diese jeweils auf einem Kämmertisch mittels Schablone auf ein Polyestergewebe aufgerakelt und anschließend im Heraeus Umlufttrockenschrank getrocknet. Es wurde stets ein gleichmäßiges Muster von Punkten erhalten. Dabei unterlag die Trockenauflage gewissen, im Labor naturgemäßen Schwankungen.

### Anwendungstechnische Messungen:

### - Messung der Quellhöhe und Quellgeschwindigkeit:

Zur Messung der Quellhöhe und der Quellgeschwindigkeit wird ein kreisrunder Ausschnitt (25,4 cm²) des beschichteten Flächengebildes in einen Kunststoffbecher mit einem Innendurchmesser von 80,5 mm und einer Höhe von 30 mm gegeben. Auf dieses Vlies werden zuerst zwei dünne Polyestervliese (Dicke 0,5 mm) und dann ein runder Stempel mit einem Durchmesser von 80 mm und einem Gewicht von 100 g gegeben. Dieser Stempel verfügt über 60 durchgehende Bohrungen von je 2 mm Durchmesser. Bei der Messung wird die Höhe der Stempeloberkante beobachtet. In den Becher werden 75 ml VE-Wasser (Leitfähigkeit <0,1 mS) gegeben und der Anstieg der Stempeloberkante nach 1 und 10 Minuten notiert (Doppelbestimmung), wobei als Nullpunkt die Stempeloberkante vor Zugabe des Wassers genommen wird. Um den Einfluß der unterschiedlichen Auftragsmengen zu eliminieren wird in einem Rechenschritt die Quellhöhe bezogen auf einen Polymerauftrag von 10 g/m² berechnet.

### Bestimmung der Retention

Zur Bestimmung der Retention wird ein kreisförmiges Stück des bedruckten Gewebes mit einem Durchmesser von 3 cm in einem handelsüblichen Teebeutel eingeschweißt. Der Beutel wird anschließend für dreißig Minuten in einer Schale mit dest.-Wasser getaucht, 10 Minuten lang aufgehängt und bei 1200 UpM in einer handelsüblichen Wäscheschleuder 5 Minuten lang geschleudert. Es wird das Gewicht des geschleuderten Teebeutels bestimmt. Zur Berechnung der Retention wird vom Gewicht des geschleuderten Teebeutels das Gewicht des trockenen Teebeutels mit Gewebe abgezogen und durch das Gewicht des aufgedruckten Polymers dividiert.

### Beispiele

### Beispiel 1:

1000 g einer Lösung eines Copolymerisats aus 90 Molprozent Acrylsäure und 10 Molprozent Acrylamid mit einem Neutralisationsgrad von 50% und einer Trockensubstanz von 25 Gew% und einer mittleren Molmasse von 200 000 g/mol wird mit 37,5 g Glyoxal 40%-ig verrührt. Die erhaltene Paste hat eine Viskosität von 9700 mPas (bestimmt bei 20°C mit einem Brookfield-Viskosimeter Spindel 4/10 UpM) und wird nach einer Stunde mittels Schablone auf ein Polyestergewebe aufgedruckt. Die bedruckten Substrate werden auf Spannrahmen für jeweils zwei Minuten in einem Umlufttrockenschrank der Marke Heraeus erhitzt. Es werden folgende Resultate erhalten:

| **Beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **1a** | 17,0 g | 145°C | 1,1 mm | 2,55 mm | 1,5 mm | 97,5 g/g |
| **1b** | 14,3 g | 150°C | 2,1 mm | 2,35 mm | 1,6 mm | 71,7 g/g |
| **1c** | 11,5 g | 155°C | 2,1 mm | 2,3 mm | 2,0 mm | 60,5 g/g |

### Beispiel 2:

Die fertig formulierte aber nicht verbrauchte Mischung aus Beispiel 1 wurde eine Woche bei Raumtemperatur gelagert und hatte dann eine Viskosität von 10 200 mPas (20°C, Brookfield Spindel 4/ 10 UpM). Die Paste wurde erneut, wie im Beipiel 1 beschrieben, verarbeitet:

| **Beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **2** | 14,2 g | 145°C | 2,05 mm | 2,60 mm | 1,8 mm | 84,9 g/g |

### Beispiel 3:

Die Paste aus Beispiel 1 wurde insgesammt 4 Wochen gelagert. Die Paste hatte nach dieser Lagerzeit eine Viskosität von 9600 mPas. Verarbeitung wie in Beispiel 1 beschrieben:

| **Beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **3** | 17,4 g | 145°C | 1,0 mm | 2,65 mm | 1,5 mm | 87,0 g/g |

### Beipiel 4:

100 g der wässrigen Copolymerisatlösung aus Beispiel 1 werden statt mit Glyoxal mit 3,83 g Glyoxylsäure (50%ig in Wasser) vermischt und nach einem Tag Lagerung wie in Beispiel 1 beschrieben verarbeitet.

| **Beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **4a** | 17,6 g/m² | 135°C | 0,7 mm | 1,4 mm | 0,8 mm | 160 g/g |
| **4b** | 14,3 g/m² | 140°C | 1,0 mm | 2,35 mm | 1,6 mm | 101 g/g |
| **4c** | 12,9 g/m² | 145°C | 1,7 mm | 1,95 mm | 1,5 mm | 84,9 g/g |
| **4d** | 14,9 g/m² | 150°C | 1,2 mm | 1,6 mm | 1,1 mm | 48,2 g/g |
| **4e** | 15,3 g/m² | 155°C | 0,9 mm | 1,4 mm | 0,9 mm | 35 g/g |

### Beispiel 5

100 g einer Lösung eines Terpolymerisats aus 94 Molprozent Acrylsäure, 5 Molprozent Acrylamid und 1 Molprozent Methoxypolyethylenglykol(1000)methacrylsäureester (Bisomer S 10W), Neutralisationsgrad 50%, TS 25%, Viskosität 11 000 mPas wurde mit 3,75 g Glyoxal 40%-ig verrührt und wie im Beispiel 1 beschrieben, weiterverarbeitet.

| **Beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **5** | 7,8 g/m² | 150°C | 0,9 mm | 1,5 mm | 1,9 mm | 180 g/g |

### Beispiel 6:

100 g der Copolymerisatlösung aus Beispiel 1 wurde mit 3 g Hexamethylentetramin vermischt und wie im Beispiel 1 beschrieben verarbeitet.

| **Beispiel** | **Aufgetragene Trockensubstanz** | **Temp.** | **Quellhöhe nach min** | **Quellhöhe nach min** | **Quellhöhe pro 10g/m**^{**2**} | **Retention (g/g)** |
|---|---|---|---|---|---|---|
| **6a** | 15,0 g/m² | 150°C | 1,65 mm | 1,5 mm | 1,0 mm | 29 g/g |
| **6b** | 14,3 g/m² | 160°C | 1,6 mm | 1,5 mm | 1,0 mm | 27 g/g |

### Beispiel 7:

Das Beispiel 6 wurde wiederholt, nur wurde der Neutralisationsgrad des verwendeten Copolymers vor Zugabe des Hexamethylentetramins mit Natronlauge auf 60 Molprozent bzw 70 Molprozent erhöht.

| **Beisp.** | **Aufgetragene Trockensubstanz** | **Neutralisationsgrad** | **Quellhöhe nach 1 min** | **Quellhöhe nach 10 min** | **Quellhöhe pro 10g/m**^{**2**} | **Retention (g/g)** |
|---|---|---|---|---|---|---|
| **7a** | 15,0 g/m² | 60 Mol% | 1,9 mm | 1,65 mm | 1,1 mm | 67,6 g/g |
| **7b** | 16,6 g/m² | 70 Mol% | 1,0 mm | 1,3 mm | 0,8 mm | 92,7 g/g |

### Beispiel 8:

Die Quellpaste nach Beispiel 4 wurde mit dest. Wasser 1:1 verdünnt, und anschließend auf Aramidfasern aufgezogen. Die so behandelten Aramidfasern wurden mit einem Heißluftfön kurzzeitig thermisch behandelt. Die behandelten Aramidfasern wurden einem Quelltest wie in der EP 482 703, Seite 5 ab Zeile 50 beschrieben unterzogen. Dabei wurde eine Polymerauflage von 16 Gew% erhalten. Das Produkt war sofort dicht und das auch bis zum Testende nach 6 Tagen.

### Vergleichsbeispiel 1:

Das Polymer aus Beispiel 1 wird mit 2 Gew% Ethylenglykolbisglycidylether vermischt. Die Produktmischung hat eine anfängliche Viskosität von 11 000 mPas. Bereits nach 4 Stunden Lagerung bei Raumtemperatur ist die Viskosität auf 27 000 mPas angestiegen. Nach einer Lagerzeit von 48h ist das Produkt vollständig vernetzt und läßt sich nur noch unter großer Kraftanstrengung und unter Verwendung von scharfkantigem Werkzeug bröckchenweise aus dem Vorratsgefäß entfernen.

### Vergleichsbeispiel 2:

Es wird ein dem Beispiel 1 vergleichbares Polymer mit einer Viskosität von 20 200 mPas verwendet, mit dem Unterschied, daß es sich um ein reines Homopolymer von Acrylsäure mit einem Neutralisationsgrad von 50% handelt, d.h. es sind keine Amidfunktionen an die Polymerkette gebunden. Dieses Polymerisat, das als 30%-ige wässrige Lösung vorliegt wird mit 3,75.Gew% Glyoxal vermischt und wie im Beispiel 1 angegeben gedruckt und getrocknet.

| **Vergleichs beispiel** | **Aufgetragene Trockensubstanz** | **Temp.** | **Quellhöhe nach 1 min** | **Quellhöhe nach 10 min** | **Quellhöhe pro 10g/m**^{**2**} | **Retention (g/g)** |
|---|---|---|---|---|---|---|
| **2** | 17,8g | 150°C | 0,0 mm | 0,15 mm | 0,1 mm | 0,0 g/g |

### Beispiel 9:

Ein wäßrige Lösung eines Polymers aus 30 Molprozent Acrylsäure, 30 Molprozent Natriumacrylat und 40 Molprozent Acrylamid mit einer WS von 28% und einer Viskosität von 7800 mPas wurde mit 0,75 Gew% Glyoxal 40%-ig vermischt und wie im Beispiel 1 beschrieben verarbeitet. Das bedruckte Gewebe wurde im Heraues-Trockenschrank 2 Minuten bei 150°C erhitzt.

| **Beispiel** | **Aufgetragene Trockensubstanz** | **Temp.** | **Quellhöhe nach 1 min** | **Quellhöhe nach 10 min** | **Quellhöhe pro 10g/ m**^{**2**} | **Retention (g/g)** |
|---|---|---|---|---|---|---|
| **9** | 17 | 150°C | 0,49 mm | 1,32 mm | 0,78 mm | 109 |

### Beispiel 10:

Eine wäßrige Lösung eines Polymers aus 20 Molprozent Acrylsäure, 20 Molprozent Natriumacrylat und 60 Molprozent Acrylamid mit einer WS von 27% und einer Viskosität von 14 400 mPas wurde mit 0,75 Gew% Glyoxal und mit 0,5 Gew% Glyoxal vermischt und wie im Beispiel 1 beschrieben verarbeitet. Die Trocknung erfolgte 2 Minuten lang im Heraeus-Umlufttrockenschrank bei 150°C.

| **Beispiel** | **Glyoxal in Gew%** | **Aufgetragene Trockensubstanz** | **Quellhöhe nach 1 min** | **Quellhöhe nach 10 min** | **Quellhöhe pro 10 g/m**^{**2**} | **Retention (g/g)** |
|---|---|---|---|---|---|---|
| **10 a** | 0,75 | 15,5 | 0,99 mm | 1,91 mm | 1,23 mm | 37 |
| **10 b** | 0,5 | 16,5 | 0,71 mm | 1,21 mm | 0,73 mm | 90 |

## Patentansprüche

1. Quellpaste aus
A) einer Komponente 1, bestehend aus einer wässrigen, teil- oder völlig neutralisierten Lösung eines Polymeren, das durch radikalische Copolymerisation von Mischungen aus
a) Amidgruppen enthaltenden Monomeren und
b) Carboxylgruppen und/oder Carboxylatgruppen enthaltenden Monomeren sowie
c) Ggf. weiteren, radikalisch polymerisierbaren Monomeren
hergestellt ist,
B) einer Komponente 2, bestehend aus einem Vernetzer und
C) ggf. weiteren Zusatzstoffen,
**dadurch gekennzeichnet, dass** die Vemetzerkomponente 2 ein Aldehyd oder ein Aldehyd abspaltende Verbindung ist.

2. Quellpaste nach Anspruch 1, **dadurch gekennzeichnet, dass** das Polymer der Komponente 1 aus
a) 1-80, bevorzugt aus 1-60, und insbesondere aus 1-20 Mol% Amidgruppen enthaltenden, radikalisch polymerisierten Monomeren
und
b) aus 20-99, bevorzugt 40-99, und insbesondere 80-99 Mol% teilneutralisierten, carboxylgruppenhaltigen, radikalisch polymerisierten Monomeren sowie
c) 0-49 Mol%, bezogen auf die Monomeren a) + b), weiteren mit a) und b) copolymerisierbaren, einpolymerisierten Monomeren besteht.

3. Quellpaste nach Anspruch 1 oder 2, **dadurch gekennzeichnet, dass** als Amidgruppen enthaltende Monomere a) für das Polymer der Komponente 1 Acrylamid und/oder Methacrylamid verwendet werden.

4. Quellpaste nach einem der Ansprüche 1 bis 3, **dadurch gekennzeichnet, dass** als carboxylgruppenhaltige Monomere für das Polymer der Komponente 1 Acrylsäure, Methacrylsäure, Maleinsäure, Fumarsäure, Itakonsäure oder Mischungen dieser Säuren verwendet werden.

5. Quellpaste nach einem der Ansprüche 1 bis 4, **dadurch gekennzeichnet, dass** die in das Polymer der Komponente 1 einpolymerisierten Monomeren b) zu mindestens 25, vorzugsweise zu mindestens 50 Mol%, neutralisiert sind.

6. Quellpaste nach einem der Ansprüche 1 bis 5, **dadurch gekennzeichnet, dass** die Vemetzerkomponente 2 als Aldehyde oder Aldehyd abspaltende Verbindungen Formaldehyd, Paraldehyd, Glyoxal, Glyoxylsäure oder Hexamethylentetramin oder deren Mischungen enthält oder daraus besteht.

7. Quellpaste nach einem der Ansprüche 1 bis 6, **gekennzeichnet durch** einen Gehalt an Vemetzerkomponente 2 von 1-15 Gew.%, bezogen auf das eingesetzte Polymer der Komponente 1.

8. Quellpaste nach einem der Ansprüche 1 bis 7, **dadurch gekennzeichnet, dass** sie nach dem Vemetzen eine Retention von mindestens 25g/g, vorzugsweise mindestens 60 g/g aufweist.

9. Quellpaste nach einem der Ansprüche 1 bis 8, **dadurch gekennzeichnet, dass** sie nach dem Vernetzen eine Quellhöhe pro 10 g/m² Trockensubstanzauftrag von mindestens 0,8 mm, vorzugsweise von mindestens 1,0 mm und besonders bevorzugt von mindestens 1,5 mm aufweist.

10. Verwendung der Quellpaste nach einem der Ansprüche 1 bis 7 zur Herstellung von absorbierenden Fasem, Faserbündeln, Fäden, Vliesen, Geweben und sonstigen vorgefertigten Flächengebilden durch Aufbringen der Quellpaste auf das Trägermaterial und nachfolgender thermischer Behandlung.

11. Verwendung der Quellpaste nach einem der Ansprüche 1 bis 7 bei der Herstellung von Energie- und Kommunikationskabeln sowie von Vliesen und Geweben für den landwirtschaftlichen Bereich, für die Bekleidungs- und Hygieneindustrie sowie für die Beerdigungsbranche.

## Claims

1. Swelling paste composed of
A) a component 1 consisting of an aqueous, partially or fully neutralized solution of a polymer prepared by free-radical copolymerization of mixtures of
a) monomers which contain amide groups and
b) monomers which contain carboxyl groups and/or carboxylate groups and also
c) optionally further free-radically polymerizable monomers,
B) a component 2 consisting of a crosslinker, and
C) optionally further additives,
**characterized in that** the crosslinker component 2 is an aldehyde or an aldehyde-detaching compound.

2. Swelling paste according to Claim 1, **characterized in that** the polymer of component 1 consists of
a) 1-80, preferably of 1-60 and especially of 1-20 mol% of free-radically polymerized monomers containing amide groups
and
b) of 20-99, preferably 40-99 and especially 80-99 mol% of partially neutralized, carboxyl-containing, free-radically polymerized monomers and also
c) 0-49 mol%, based on the monomers a) + b) of further copolymerized monomers which are copolymerizable with a) and b).

3. Swelling paste according to Claim 1 or 2, **characterized in that** acrylamide and/or methacrylamide are used as amide group containing monomers a) for the polymer of component 1.

4. Swelling paste according to any one of Claims 1 to 3, **characterized in that** acrylic acid, methacrylic acid, maleic acid, fumaric acid, itaconic acid or mixtures thereof are used as carboxyl group containing monomers for the polymer of component 1.

5. Swelling paste according to any one of Claims 1 to 4, **characterized in that** the monomers b) copolymerized in the polymer of component 1 are at least 25 and preferably at least 50 mol% neutralized.

6. Swelling paste according to any one of Claims 1 to 5, **characterized in that** the crosslinker component 2 contains or consists of formaldehyde, paraldehyde, glyoxal, glyoxylic acid or hexamethylenetriamine or mixtures thereof as aldehydes or aldehyde-detaching compounds.

7. Swelling paste according to any one of Claims 1 to 6, **characterized by** a crosslinker component 2 content of 1-15% by weight, based on the component 1 polymer used.

8. Swelling paste according to any one of Claims 1 to 7, **characterized in that** it has a retention value of at least 25 g/g and preferably at least 60 g/g after crosslinking.

9. Swelling paste according to any one of Claims 1 to 8, **characterized in that** it has a swelling height per 10 g/m² of dry substance application of at least 0.8 mm, preferably at least 1.0 mm and more preferably at least 1.5 mm after crosslinking.

10. Use of the swelling paste according to any one of Claims 1 to 7 for producing absorbing fibres, fibre bundles, threads, nonwovens, wovens and other prefabricated sheetlike structures by applying the swelling paste to the carrier material and subsequent thermal treatment.

11. Use of the swelling paste according to any one of Claims 1 to 7 in the production of energy and communication cables and also of nonwovens and wovens for the agricultural sector, for the clothing and hygiene industry and also for the undertaking trade.

## Revendications

1. Pâte de gonflement faite
A) d'un composant 1, se composant d'une solution aqueuse, partiellement ou complètement neutralisée, d'un polymère, qui est préparé par polymérisation radicalaire de mélanges
a) de monomères contenant des groupements amide et
b) de monomères contenant des groupements carboxyles et/ou des groupements carboxylates ainsi que,
c) le cas échéant, de monomères supplémentaires, capables de polymérisation radicalaire,
B) d'un composant 2, se composant d'un agent de réticulation et,
C) le cas échéant, d'adjuvants supplémentaires,
**caractérisée en ce que** le composant d'agent de réticulation 2 est un aldéhyde ou un composé clivant un aldéhyde.

2. Pâte de gonflement selon la revendication 1, **caractérisée en ce que** le polymère du composant 1 se compose
a) de 1-80, de préférence de 1-60, en particulier de 1-20% en moles de monomères contenant des groupements amides, capables de polymérisation radicalaire et
b) de 20-99, de préférence de 40-99, et en particulier de 80-99% en moles de monomères contenant des groupements carboxyles, partiellement neutralisé, capables de polymérisation radicalaire ainsi que
c) de 0-49% en moles, par rapport aux monomères a) + b), de monomères supplémentaires polymérisés, capables de polymérisation avec a) et b).

3. Pâte de gonflement selon la revendication 1 ou 2, **caractérisée en ce que** l'on utilise l'acrylamide et/ou le méthacrylamide, en tant que monomère a) contenant des groupements amide, pour le polymère du composant 1.

4. Pâte de gonflement selon l'une quelconque des revendications 1 à 3, **caractérisée en ce que** l'on utilise l'acide acrylique, l'acide méthacrylique, l'acide maléique, l'acide fumarique, l'acide itaconique ou des mélanges de ces acides, en tant que monomères contenant des groupements carboxyliques, pour le polymère du composant 1.

5. Pâte de gonflement selon l'une quelconque des revendications 1 à 4, **caractérisée en ce que** les monomères b), incorporés par polymérisation dans le polymère du composant 1, sont neutralisés à raison d'au moins 25, de préférence à raison d'au moins 50% en moles.

6. Pâte de gonflement selon l'une quelconque des revendications 1 à 5, **caractérisée en ce que** le composé clivant l'agent de réticulation 2 en tant qu'aldéhydes ou aldéhyde contient du formaldéhyde, du paraldéhyde, du glyoxal, de l'acide glyoxylique ou de l'hexaméthylènetriamine ou leurs mélanges ou en est constitué.

7. Pâte de gonflement selon l'une quelconque des revendications 1 à 6, **caractérisée par** une teneur en composant de réticulation 2, de 1-15% en poids, par rapport au polymère utilisé du composant 1.

8. Pâte de gonflement selon l'une quelconque des revendications 1 à 7, **caractérisée en ce qu'**elle présente, après la réticulation, une rétention d'au moins 25 g/g, de préférence d'au moins 60 g/g.

9. Pâte de gonflement selon l'une quelconque des revendications 1 à 8, **caractérisée en ce qu'**elle présente, après la réticulation, une hauteur de gonflement par 10 g/m² d'application de substances sèches d'au moins 0,8 mm, de préférence d'au moins de 1,0 mm et particulièrement de préférence d'au moins 1,5 mm.

10. Utilisation de la pâte de gonflement selon l'une quelconque des revendications 1 à 7 en vue de la fabrication de fibres, de faisceaux de fibres, des fils, de matériaux non tissés, de tissus absorbants et d'autres structures superficielles préfabriquées absorbantes quelconques par une application de la pâte de gonflement sur le matériau de support et par un traitement thermique ultérieur.

11. Utilisation de la pâte de gonflement selon l'une quelconque des revendications 1 à 7, lors de la fabrication de câbles de transport d'énergie et de câbles de communication ainsi que de non-tissés et de tissus pour le secteur agricole, pour l'industrie de l'habillement et le secteur de l'hygiène ainsi que pour le secteur des pompes funèbres.
